# EUROPEAN PATENT SPECIFICATION

(11) **EP 0 967 608 B1**
(45) Date of publication and mention of the grant of the patent: **10.08.2005**
(21) Application number: 99303536.9
(22) Date of filing: 06.05.1999
(51) Int. Cl.: G11B 27/034, G11B 27/10, G11B 27/32, G11B 20/12, H04N 5/926, H04N 9/804, H04N 5/85, G11B 7/00

(54) **Optical disk recording/reproducing method**
Aufzeichnungs-/Wiedergabeverfahren für optische Platte
Procédé d'enregistrement/de reproduction de disque optique

(30) Priority: 27.06.1998 KR 9824554
(43) Date of publication of application: 29.12.1999
(60) Divisional application: 01114729.5
(73) Proprietor: SAMSUNG ELECTRONICS CO., LTD., Suwon-City, Kyungki-do (KR)
(72) Inventor: Park, Pan-gie, Suwon-city, Kyunkgi-do (KR); OH, Young-nam, Sungnam-city, Kyungki-do (KR); Chung, Tae-yun, Gwachum-city, Kyungki-do (KR); Kang, Jung-suk, Songpagu, Seoul (KR); Moon, Seong-jin, Seoul (KR)
(74) Representative: Chugg, David John

(56) References cited:
- EP-A- 0 808 072
- EP-A- 0 903 738
- EP-A- 0 929 072
- EP-A- 0 942 426
- WO-A-97/06531
- WO-A-97/46007
- WO-A-98/44508
- WO-A-99/38166
- US-A- 5 751 371

## Description

The present invention relates to an optical disk recording/reproducing method, and more particularly, to a method of recording/reproducing audio and video data on a rerecordable optical disk in real time.

A typical digital video disc (DVD) read only memory (ROM) video player reproduces audio and video data using a disk.

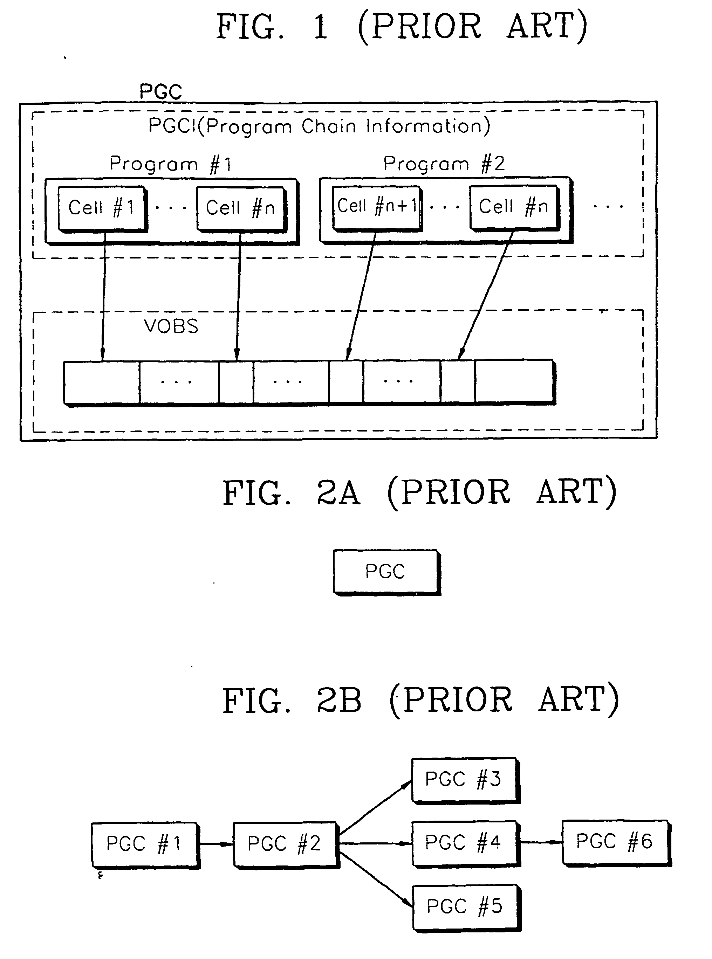

A DVD ROM video format, as shown in Figure 1, is comprised of program chains (PGC), programs, and cells for logically dealing with data, and video objects (VOBS) in which audio and video data has been recorded.

If a movie has been recorded into first and last volumes, the entire movie is represented by a PGC, and the first and second volumes each can be represented by programs. Also, each of the programs can be divided into several small units, cells, in consideration of a random access, and data included in each cell exists in a partial area of VOBS.

A manufacturer, who manufactures data in the DVD ROM video format, constitutes original audio and video data items in forms of the PGC, the program, and the cell and provides the result to users.

As shown in Figure 1, program chain information (PGCI) is the connection information of several programs, and VOBS is a video object (VOB) collection in which actually-compressed audio and video data items have been recorded. One or more programs exist in one PGCI, and one program is comprised of a collection of one or more cell units. Each cell is a sort of recording/reproducing unit, and audio and video data exists in the VOBS. The PGCI has only program information such as the position of audio and video data or the recording/reproducing time existing in the VOBS. The VOB in the VOBS is subdivided into video object units (VOBU) which are used as random access units of a disk recording/reproducing apparatus. In general, the VOBU is constituted of motion picture experts group (MPEG) video data and audio data multiplexed in units of a sector.

The relationship between the title and the PGC in a DVD-ROM video will now be described. For example, a title can correspond to an entire movie, and is the largest unit of a data structure from a user's standpoint. When a manufacturer, manufacturing the DVD-ROM video disk with such a title, forms a data structure, one PGC may comprise one title as shown in Figure 2A, or several PGCs comprise one title as shown in Figure 2B according to the manufacturer's intention. When the title constituted as shown in Figure 2B is reproduced in sequence, PGC#1 and PGC#2 are reproduced, one of PGC#3, PGC#4, and PGC#5 is selected and reproduced, and finally PGC#6 is reproduced. Here, PGC#3, PGC#4, and PGC#5 may have different contents, or may have different editions of the same content.

From a user's standpoint, the title has such a large concept that it can be divided into several chapters or parts of title (PTT) to allow a scene to rapidly jump to the next scene. In the case of a music CD, an entire collection of songs recorded in the CD correspond to one title, and each of the songs corresponds to the chapter or PTT. The programs and cells are reproduction and recording units determined by a user according to the properties of data. In the PGC corresponding to a title concept, the PTT is divided by the content of data and logically provided to the user.

The PTT also has its own information in the form of a PTT search pointer table among areas of information on the title.

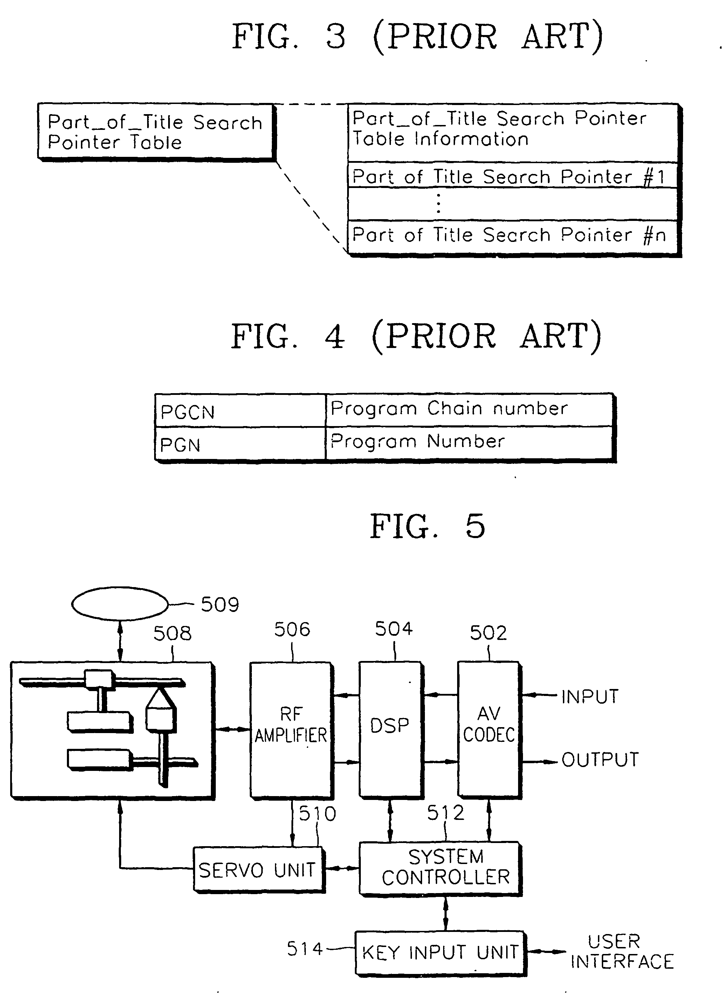

A PTT search pointer table shown in Figure 3 is comprised of a PTT search pointer table information area, and PTT search pointers existing in a title. Here, the PTT search pointer table information area has information on the number of PTT pointers. Each of the PTT search pointers indicates a point of time when a PTT starts, and is comprised of a program chain number (PGCN) and a program number (PGN). Here, the PGCN represents the number of a program chain (PGC) to which the PTT pertains, and the PGN represents the number of a program in the PGC. A lot of PTT information is moved from a current position, where PTT information is being reproduced, to the next PTT, and then is reproduced, when a user has received the next PTT command via an external input device.

In the DVD-ROM video format, the programs constituting a PGC as shown in Figure 1 are consistent with the content actually recorded on a disk. That is, an area in a specific range is constituted of programs through a special manufacturing process on the basis of the contents recorded on the disk, and a specific program can be defined to be selected from the several programs and used as PTT. Also, the program units are divided in accordance with the contents of recorded data, so that the PTT information can use the program units. However, in an apparatus for recording/reproducing audio and video data in real time, units such as programs, cells, etc. cannot be constituted in accordance with the contents of data recorded on a disk, unless special information on the contents recorded data is provided in real time. Therefore, if the PTT is constituted according to the prior art, PTT information is meaningless to users.

EP0808072 (TOKYO SHIBAURA ELECTRIC CO) discloses video title set information including a part of title search pointer table, in which selectable video titles, that is, program chain (PGC) or programs contained in the selectable video title set are described in accordance with a number entered by a user from a key/display section. Entering the desired one of the entry numbers listed in a pamphlet accompanying the optical disk from the key/display section, the user can watch the video starting with the section in the story corresponding to the entered number.

With a view to solve or reduce the above problem, it is an aim of preferred embodiments of the present invention to provide an optical disk recording and reproducing method of recording and reproducing part of title (PTT) information depending on real-time recorded data contents on a rewritable disk.

According to a first aspect of the invention, there is provided an optical disk recording method of recording audio and/or video data on a rewritable disk in real time, the method comprising the steps of: recording the audio and/or video data in a specific area on the disk; and forming a plurality of cells, each cell comprising a part of the recorded audio and/or video data, forming a program from one or more of the cells, forming a part of title (PTT) designating a specific portion of the recorded audio and/or video data, and recording information of the formed cells, program, and PTT on the disk, the method being characterised in that the PTT comprises a structure which can designate a specific area within a cell of the program.

Preferably, forming of a cell comprises forming the cell based on a recording start and end command from a user.

Preferably, the program is formed on the basis of recorded information of the one or more cells.

Preferably, the PTT is formed by configuring it at intervals of a regular reproducing time with reference to a time for reproducing the cells.

The disk recording method may further comprise the step of randomly accessing the PTT within a specific unit of a data structure for reproduction or recording.

For a better understanding of the invention, and to show how embodiments of the same may be carried into effect, reference will now be made, by way of example, to the accompanying diagrammatic drawings, in which:
Figure 1 is a block diagram illustrating the relationship between a program chain (PGC), programs, cells, and video objects (VOBS) in a DVD ROM video;
Figures 2A and 2B are block diagrams illustrating the relationship between a title and a PGC in a DVD-ROM video;
Figure 3 is a detailed view of a part of title (PTT) search pointer table;
Figure 4 is a detailed view of a PTT search pointer;
Figure 5 is a block diagram of an optical disk recording/reproducing apparatus for providing PTT information, according to an embodiment of the present invention;
Figure 6 is a detailed view of a PTT search pointer according to embodiments of the present invention;
Figure 7 is a flowchart illustrating an optical disk recording method for recording PTT information.
Figure 8 is a flowchart illustrating an optical disk reproducing method for searching PTT information; and
Figure 9 is a flowchart illustrating an optical disk recording method for recording the positions of PTT.

The operation of an optical disk recording/ reproducing apparatus shown in Figure 5 will be described in a recording mode and a reproducing mode, as follows.

In the recording mode, an audio/video (AV) codec 502 compresses and encodes input external audio and video data in predetermined units according to a predetermined compression encoding system, and simultaneously provides information such as the size of audio and video data encoded by the predetermined units, or the time for reproduction. A digital signal processor (DSP) 504 adds additional data for error correction code (ECC) to the data encoded by the AV codec 502, modulates the resultant data, and outputs the result.

An RF amplifier 506 amplifies the data input from the DSP 504 and converts the amplified data into an optical signal. A pick-up unit 508 includes an actuator, and records the output optical signal of the RF amplifier 506 on a disk 509. A servo unit 510 receives information necessary for servo control from the DSP 504 via the RF amplifier 506 and a system controller 512, and performs a stable servo function for the pickup unit 508. The system controller 512 controls the whole system, generates logical information such as programs or cells with respect to data to be recorded, and receives start position information of PTT desired by a user, via a key input unit 514 or generates PTT information using an arbitrary method and controls the received or generated PTT information to be recorded on the disk 509 via the DSP 504, the RF amplifier 506, and the pick-up unit 508.

Meanwhile, in the reproducing mode, the pick-up unit 508 in the reproduction mode reads data stored on the disk 509 and outputs the read data as an optical signal. The RF amplifier 506 converts the optical signal output by the pick-up unit 508 to an electrical signal, extracts modulated data, and generates a servo signal for performing a stable servo function, using the electrical signal. The DSP 504 demodulates the modulated data of the RF amplifier 506, and removes additional data while correcting errors by performing ECC. The servo unit 510 performs a stable servo function using a servo signal generated by the RF amplifier 506. The AV codec 502 decodes audio and video data compressed and coded by the DSP 504. The system controller 512 controls the pick up unit 508, the RF amplifier 506, the DSP 504, and the AV controller 502 according to a command input by a user via the key input unit 514. Particularly, when a command next/previous PTT" is input, the system controller 512 controls the pick up unit 508, the RF amplifier 506, the DSP 504, and the AV controller 502 to reproduce PTT, corresponding to the input command.

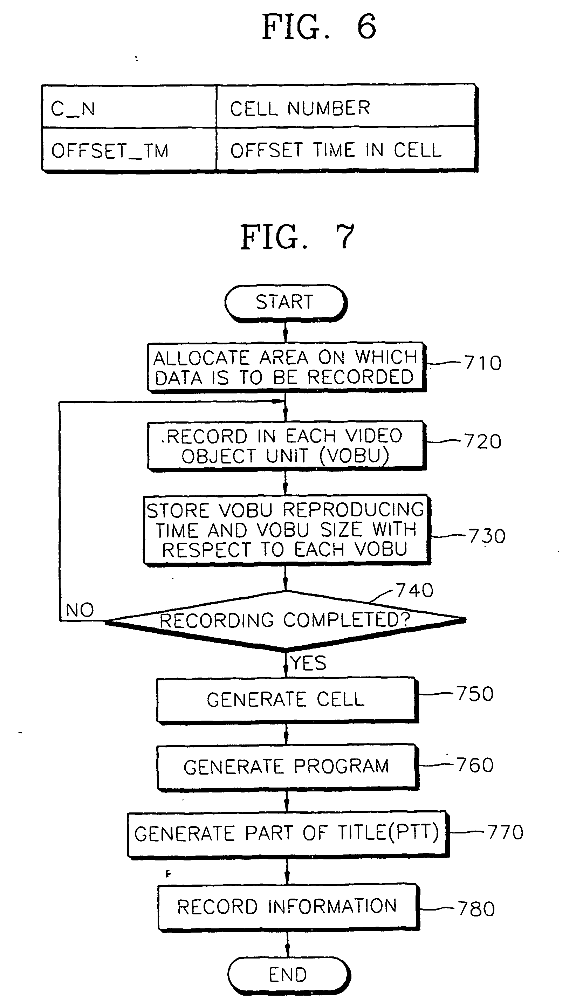

Figure 6 is a detailed view of a PTT search pointer according to the present invention. The PTT search pointer is represented in the PTT search pointer information as shown in Figure 3. The PTT search pointer is comprised of C_N representing a cell number in a program chain (PGC), and OFFSET_TM having reproduction time information from the start position of a cell to a specific position indicated by PTT. Here, the reproduction time information is represented in the form of a hour/minute/second frame on the basis of video data. Thus, PTT is a structure which can designate a specific area in a cell which belongs to the PGC. This is because the configurations of cells and programs in a general optical disk recording/reproducing apparatus are not consistent with the contents of recorded data, and because the configuration of the cells may be too long in some cases.

Accordingly, while the PTT is reproduced, the PTT is randomly accessed within specific units such as the cells and programs used in the data structure for reproduction and recording.

A method of recording PTT information on an optical disk under the control of the system controller 512 of Figure 5 will now be described referring to Figure 7.

In step 710, a physical area on a disk, on which data is to be recorded, is previously allocated to use an area unoccupied by data.

In step 720, input external audio and video data is recorded in video object units (VOBU) constituting a video object (VOB).

In step 730, information such as the size of each of the recorded VOBU and the time for reproducing the VOBU is stored in a special memory.

In step 740, it is determined whether recording is completed.

When all recording is completed, a cell is formed with a part of audio and video data using the information such as the size and the reproducing time of the VOBU stored in the special memory, in step 750. A program is generated with one or more cells in step 760, and a PTT is generated with a specific portion of the audio and video data in step 770.

As a consequence, the cell, the program, and the PTT information are recorded on a disk in step 780.

The program, the cell and the PTT information can be constituted by being individually received from a user, but generally they are arbitrarily constituted in a disk recording apparatus to avoid inconvenience to users and to save time. The cell can be formed in various cases. For example, the cell can be comprised of the start and end of a recording command input by a user via the key input unit 514 of Figure 5. The program also can be constituted in various cases. For example, the program can be comprised of cells recorded on the same date. The PTT information includes the contents of Figures 3 and 6, and can be configured at intervals of a predetermined reproducing time in consideration of the time for reproducing the configured cells.

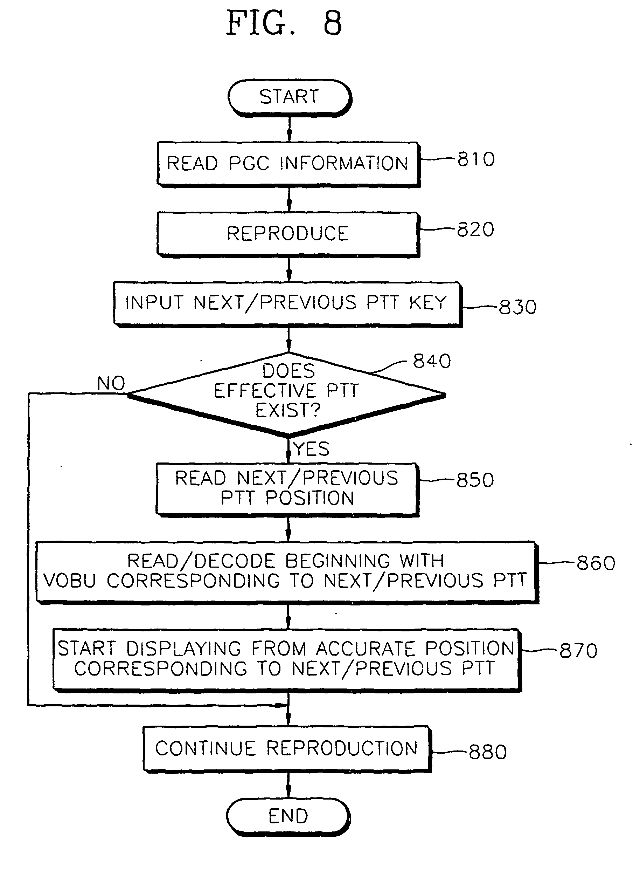

A PTT searching process performed by the system controller 512 of Figure 5 during reproduction of an optical disk will now be described referring to Figure 8.

First, the system controller 512 reads PGC information from a memory (not shown) to receive a user command from a user interface and start reproduction, in step 810. An optical disk is reproduced using the PGC information in step 820.

When a "next/previous PTT" command key is input by a user during reproduction of the optical disk in step 830, existence of effective PTT information is checked in step 840. This is because while the last or first PTT in a current PGC is being reproduced, PTT information corresponding to the next/previous PTT command cannot be dealt with.

If there exists effective PTT, the next/previous PTT position information as shown in Figure 6 is read, in step 850. In step 860, a VOBU, being the minimum unit in recording, corresponding to the next/previous PTT is read and decoded first.

Here, the position of the next/previous PTT is not generally consistent with the position of the VOBU. Accordingly, when the position of the VOBU becomes a accurately desired PTT position, the decoded data is displayed on a screen, in step 870. Reproduction continues in step 880.

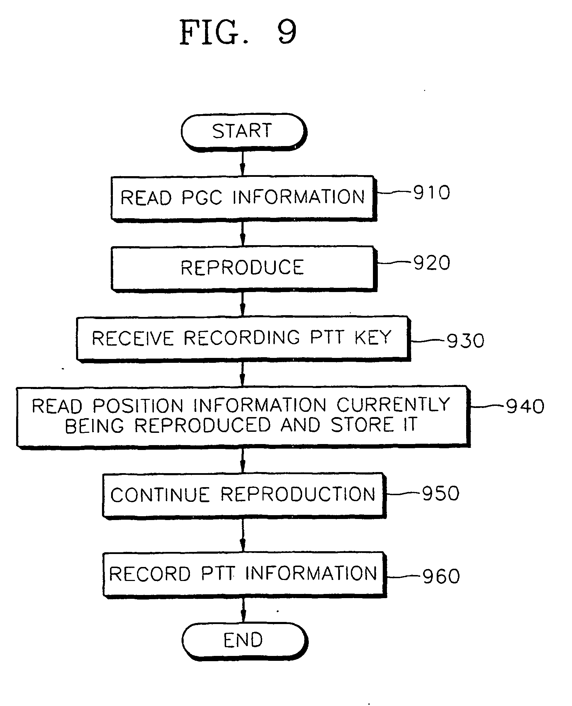

A PTT position recording method by the system controller 512 of Figure 5 will now be described referring to Figure 9.

First, when reproduction through a user interface with a user starts, the system controller 512 reads PGC information from a memory (not shown), in step 910. Then, an optical disk is reproduced using the PGC information in step 920.

When a user inputs a recording PTT key during reproduction in step 930, a position, currently being reproduced at the point of time when the key is input, is understood as the cell number in the PGC and the offset reproducing time information in the cell as shown in Figure 6, referring to the PGC information, and stored in a separate memory (not shown), in step 940. Reproduction continues in step 950. After the reproduction is completed, stored PTT information is recorded on the optical disk, in step 960.

According to embodiments of the present invention, audio and video data can be recorded/reproduced on/from a rewritable optical disk in real time by providing PTT information that is consistent with recorded data contents. Also, a user can randomly access a PTT within specific units for reproduction and recording.

## Claims

1. An optical disk recording method of recording audio and/or video data on a rewritable disk in real time, the method comprising the steps of:
recording the audio and/or video data in a specific area on the disk; and
forming a plurality of cells, each cell comprising a part of the recorded audio and/or video data, forming a program from one or more of the cells, forming a part of title (PTT) designating a specific portion of the recorded audio and/or video data, and recording information of the formed cells, program, and PTT on the disk, the method being **characterised in that** the PTT comprises a structure which can designate a specific area within a cell of the program.

2. The disk recording method as claimed in claim 1, wherein forming of a cell comprises forming the cell based on a recording start and end command from a user.

3. The disk recording method as claimed in claim 1 or 2, wherein the program is formed on the basis of recorded information of the one or more cells.

4. The disk recording method as claimed in claim 1, 2 or 3, wherein the PTT is formed by configuring it at intervals of a regular reproducing time with reference to a time for reproducing the cells.

5. The disk recording method as claimed in claim 4, further comprising the step of randomly accessing the PTT within a specific unit of a data structure for reproduction or recording.

## Patentansprüche

1. Aufzeichnungsverfahren für eine optische Platte zum Aufzeichnen von Audio- und/oder Videodaten auf einer wiederbeschreibbaren Platte in Echtzeit, das Verfahren umfasst die folgenden Schritte:
Aufzeichnen der Audio- und/oder Videodaten in einem bestimmten Bereich auf der Platte und
Bilden einer Vielzahl von Zellen, wobei jede Zelle einen Teil der aufgezeichneten Audio- und/oder Videodaten umfasst, Bilden eines Programms aus einer Zelle oder mehreren von Zellen, Bilden eines Teil des Titels (PTT), der einen bestimmten Teil der aufgezeichneten Audio- und/oder Videodaten, die Aufzeichnungsinformation der gebildeten Zellen, das Programm und den PTT auf der Platte bezeichnet; das Verfahren ist **dadurch gekennzeichnet, dass** der PTT eine Struktur, die einen bestimmten Bereich innerhalb einer Zelle des Programms bezeichnen kann, umfasst.

2. Plattenaufzeichnungsverfahren nach Anspruch 1, wobei das Bilden einer Zelle das Bilden der Zelle basierend auf einem Befehl von einem Benutzer zum Beginnen und zum Beenden der Aufzeichnung umfasst.

3. Plattenaufzeichnungsverfahren nach Anspruch 1 oder 2, wobei das Programm auf der Basis der aufgezeichneten Informationen der einen Zelle oder der mehreren Zellen gebildet wird.

4. Plattenaufzeichnungsverfahren nach Anspruch 1, 2 oder 3, wobei der PTT **dadurch**, dass er in Bezug auf eine Zeit zum Wiedergeben der Zellen in intervallen von einer regulären Wiedergabezeit konfiguriert wird, gebildet wird.

5. Plattenaufzeichnungsverfahren nach Anspruch 4, des Weiteren den Schritt des direkten Zugreifens auf den PTT innerhalb einer bestimmten Einheit einer Datenstruktur zum Wiedergeben oder Aufzeichnen umfassend.

## Revendications

1. Procédé d'onregistrement de disque optique consistant à enregistrer des données audio et/ou vidéo sur un disque réinscriptible en tempe réel, le procédé comportant les étapes consistant à :
enregistrer les données audio et/ou vidéo dans une zone spécifique sur le disque, et
former une pluralité de cellules, chaque cellule comportant une partie des données audio et/ou vidéo enregistrées, former un programme à partir d'une ou de plusieurs cellules, former une partie de titre (PTT) désignant une partie spécifique des données audio et/ou vidéo enregistrées, et enregistrer des informations des cellules formées, du programme, et de la partie PTT sur le disque, le procédé étant **caractérisé en ce que** la partie PTT comporte une structure qui pout désignar une zone spécifique dans une cellule du programme.

2. Procédé d'enregistrement de disque selon la revendication 1, dans lequel la formation d'une cellule comporte l'étape consistant à former la cellule sur la base d'une instruction de début et de fin d'enregistrement provenant d'un utilisateur.

3. Procédé d'enregistrement de disque selon la revendication 1 ou 2, dans lequel le programme est formé sur la base d'informations enregistrées de la cellule ou des plusieurs cellules.

4. Procédé d'enregistrement de disque selon la revendication 1, 2 ou 3, dans lequel la partie PTT est formée en la configurant selon des intervalles d'une durée de lecture régulière en rérérence à une durée pour lire les cellules.

5. Procédé d'enregistrement de disque selon la revendication 4, comportant en outre l'étape consistant à accéder de manière aléatoire à la partie PTT dans une unité spécifique d'une structure données en vue d'une lecture ou d'un enregistrement.
